# FASCICULE DE BREVET EUROPEEN

(11) **EP 3 341 274 B1**
(45) Date de publication et mention de la délivrance du brevet: **19.06.2019**
(21) Numéro de dépôt: 16763924.4
(22) Date de dépôt: 24.08.2016
(51) Int. Cl.: B62K 27/00, B62K 7/04, B62K 13/04, B62B 7/00, B62B 7/02, B62B 1/00, B62K 5/10, B62K 5/05

(54) **TRAIN AVANT DE TRICYCLE OU DE TRIPORTEUR**
VORDERRAHMEN EINES DREIRADES ODER DREIRADROLLERS
FRONT FRAME OF A TRICYCLE OR THREE-WHEEL SCOOTER

(30) Priorité: 27.08.2015 FR 1557962
(43) Date de publication de la demande: 04.07.2018
(73) Titulaire: Addbike, 69009 Lyon (FR); Institut National des Sciences Appliquées de Lyon, 69100 Villeurbanne (FR)
(72) Inventeur: SALGAS, Pierre, 69600 Oullins (FR); CARTON, Guy, 69290 Saint Genis les Ollieres (FR); BRAEM, Robin, 59133 Phalempin (FR); POULAIN, Anthony, 26140 Anneyron (FR)
(74) Mandataire: IP Trust
(86) Numéro de dépôt international: PCT/FR2016/052115
(87) Numéro de publication internationale: WO 2017/032951

(56) Documents cités:
- EP-A1- 2 077 223
- WO-A1-2014/016174
- NL-C1- 1 032 554
- US-B1- 8 070 172

## Description

### DOMAINE DE L'INVENTION

La présente invention concerne le domaine des cycles à pédales. Elle concerne en particulier un train avant permettant de transformer un cycle classique en tricycle ou triporteur.

### ARRIERE PLAN TECHNOLOGIQUE DE L'INVENTION

Aujourd'hui, avec l'augmentation de la pollution urbaine, de nombreux individus ont fait le choix ou projettent d'utiliser plus largement leur bicyclette pour leurs différents déplacements urbains ou péri-urbain : se rendre au travail, faire des déplacements professionnels par exemple de livraison, se déplacer à l'intérieur d'un site industriel étendu, amener les enfants à l'école, aller faire les courses, faire des randonnées... Malgré de nombreuses solutions consistant en de petites remorques à fixer à l'arrière du vélo, des paniers à fixer sur le guidon ou le porte-bagage, les bicycles conventionnels ne constituent pas des véhicules suffisamment pratiques, sûrs et maniables pour le transport d'enfants ou de marchandises, pour remplacer efficacement la voiture dans la vie quotidienne.

Pour gagner en stabilité, plusieurs véhicules à trois roues (tricycles ou triporteurs) ont fait leur apparition, comportant notamment des roues avant inclinables pour plus de maniabilité, comme par exemple décrit dans le document FR2995255. Ils présentent néanmoins l'inconvénient d'être moins adaptés aux loisirs tels que les randonnées, comparé aux bicycles, obligeant ainsi l'utilisateur à posséder un bicycle et un tricycle pour répondre à l'ensemble de ses besoins.

Une solution élégante est donc de procurer un système capable de transformer un bicycle conventionnel en tricycle ou triporteur urbain, de manière simple et rapide.

Le document US20140091551 propose un système pour rendre les bicycles plus utilitaires et fonctionnels. L'appareil comprend un élément de cadre fixé à la partie inférieure (boîtier du pédalier) de la bicyclette existante, et un élément fixé à la fourche, à la place de la roue avant d'origine. L'appareil est orientable en utilisant le guidon et la fourche et est configuré pour la stabilité dans les virages. L'appareil comprend un transporteur de fret situé à l'avant du tricycle, permettant de voir le chargement, tout en maintenant un centre de gravité stable et aussi une capacité à se pencher pour la stabilité en virage. Un inconvénient de cette solution vient du fait que le montage reste complexe, donc peu flexible dans le cas d'utilisation multiples en bicycle ou en tricycle.

Le document EP1690782 divulgue une remorque s'accouplant à un bicycle. Ladite remorque inclut une première partie de cadre, un coupleur du cadre disposé sur la première partie et au moyen duquel la première partie du cadre peut être couplée rigidement au cadre du vélo, une première roue et une seconde roue disposées parallèlement l'une par rapport à l'autre, et qui peuvent être dirigées autour d'un axe de direction afin d'orienter la trajectoire, et un mécanisme de direction relié aux roues, de sorte que la trajectoire puisse être ajustée au moyen du mécanisme de direction. Le mécanisme de direction inclut un support de direction adapté pour être couplé à l'extrémité libre de la fourche avant quand la roue avant du vélo est retirée. Les axes de direction de la première roue et de la seconde roue sont déplacés dans la direction longitudinale de la remorque de vélo par rapport à l'axe de direction du vélo quand la remorque est couplée au vélo. Cette solution assure une très bonne stabilité mais présente un manque de maniabilité du guidon pour l'utilisateur, compte tenu de l'absence d'inclinaison des roues avant par rapport au sol. De plus, elle n'est pas adaptable sur toutes les bicyclettes classiques.

Le document EP2077223 concerne une fourche améliorée pour bicyclettes ou analogues, destinée au transport d'objets, qui consiste en :
- une fourche supérieure, laquelle est fixée au niveau de sa partie inférieure à un corps de trapèze,
- deux blocs placés de chaque coté de ce corps et articulés sur ce trapèze, chaque bloc étant équipé d'au moins une roue et d'un système d'amortissement indépendant
- des éléments de fixation destinés à la fixation d'au moins une plateforme pour le transport d'objets.

L'inconvénient principal de cette solution vient du fait que la plateforme pour le transport d'objet est fixée sur la fourche : une charge importante aura ainsi tendance à impacter la maniabilité du guidon et sera inconfortable pour l'utilisateur.

### OBJET DE L'INVENTION

Un objet de l'invention est donc de proposer un dispositif obviant les inconvénients de l'art antérieur. Un objet de l'invention est notamment un train avant de cycle à pédales, permettant de transformer un bicycle classique en tricycle ou triporteur maniable, sûr et offrant un confort de conduite proche de celui d'un bicycle.

### BREVE DESCRIPTION DE L'INVENTION

L'invention concerne un train avant d'un cycle à pédales comprenant deux roues avant inclinables associées à un mécanisme de parallélogramme déformable, comportant au moins deux corps rigides sensiblement horizontaux en liaison tournante avec un corps rigide central sensiblement vertical et avec deux corps rigides latéraux, sensiblement verticaux et respectivement liés aux roues. Le train avant est remarquable en ce qu'au moins un des corps rigides sensiblement horizontaux comporte des moyens de fixation destinés à solidariser un module de transport d'une charge.

Selon des caractéristiques avantageuses de l'invention, prises seules ou en combinaison :
- le train avant d'un cycle à pédales comprend un système d'amortisseur à frottement sec dont une première partie est solidaire du corps rigide central et une deuxième partie est solidaire d'un des corps rigides sensiblement horizontaux ;
- la première partie du système d'amortisseur comprend une mâchoire et la deuxième partie comprend une pièce plane, la mâchoire étant apte à se resserrer sur la pièce plane ;
- la mâchoire est configurée pour être commandée à l'aide d'un élément d'interface destiné à être piloté par l'utilisateur, pour permettre l'application d'une pression de serrage variable sur la pièce plane ;
- le système d'amortisseur à frottement sec est un système de ressort amortisseur, solidaire du corps rigide central et soutenu à ses extrémités par des guides de maintien fixés sur l'un des corps rigides sensiblement horizontaux ;
- la position longitudinale des guides de maintien sur le corps rigide sensiblement horizontal est réglable pour permettre d'ajuster les effets amortisseur et ressort ;
- le système d'amortisseur à frottement sec est un système d'amortisseurs à lames ;
- le nombre ou l'épaisseur des lames composant le système d'amortisseurs est modifiable pour permettre d'ajuster les effets amortisseur et ressort ;
- le corps rigide central est solidaire d'une fourche de direction dudit cycle à pédales ;
- au moins deux zones de fixation rendent solidaires le corps rigide central et la fourche de direction ;
- les zones de fixation sur le corps rigide central sont ajustables en hauteur pour s'adapter à différentes tailles de fourche ou de bicyclette ;
- le corps rigide central constitue une fourche de direction dudit cycle à pédales ;
- les moyens de fixation destinés à solidariser le module sont sur le corps rigide sensiblement horizontal supérieur du mécanisme de parallélogramme déformable ;
- le corps rigide supérieur a une largeur supérieure à celle du corps rigide inférieur ;
- le train avant d'un cycle à pédales comprend en outre un module adapté au transport de la charge, uniquement solidaire d'un des corps rigides sensiblement horizontaux ;
- le module est une plateforme ou un chariot ou un caisson pour le transport d'enfants ;

Le train avant d'un cycle à pédales selon l'invention permet de limiter l'impact du poids de la charge sur la fourche de direction, le module de transport de charge étant destiné à être solidarisé sur l'un des corps rigides horizontaux et non directement sur la fourche de direction du cycle à pédales.
De plus, le train avant selon l'invention permet d'amortir les mouvements d'inclinaison de la fourche de direction et d'aider à son retour en position centrale, grâce à son système de amortisseur à frottement sec réglable.

Le train avant selon l'invention permet de transformer un bicycle en tricycle ou en triporteur facilement, en se fixant en deux zones de fixations sur la fourche, après retrait de la roue avant du bicycle.
Il peut également former le train avant d'un tricycle ou triporteur non transformable, le corps rigide central pouvant être adapté pour constituer la fourche de direction du cycle.

### BREVE DESCRIPTION DES DESSINS

D'autres caractéristiques et avantages de l'invention ressortiront de la description détaillée de l'invention qui va suivre en référence aux figures annexées sur lesquelles :
- la figure 1 présente une vue en perspective, de face, d'un train avant selon un mode de réalisation de l'invention ;
- la figure 2 présente une vue en perspective, de face et légèrement de dessous, d'un train avant selon un mode de réalisation de l'invention ;
- les figures 3a et 3b présentent des vues en perspective, de dos, de trains avant selon deux variantes de l'invention ;
- la figure 3c présente un schéma d'un train avant (de dos) selon l'invention ;
- la figure 4 présente un schéma d'un train avant selon l'invention fixé sur une fourche de direction d'un cycle ;
- la figure 5 présente une vue en perspective d'une zone de fixation du train avant sur une fourche de direction d'un cycle ;
- les figures 6a, 6b et 6c présentent des vues en perspective de modules pour le transport de charge se fixant sur le train avant selon l'invention.
- la figure 7 présente le mouvement relatif d'une fourche de direction et d'un module fixés sur un train avant selon l'invention.

### DESCRIPTION DETAILLEE DE L'INVENTION

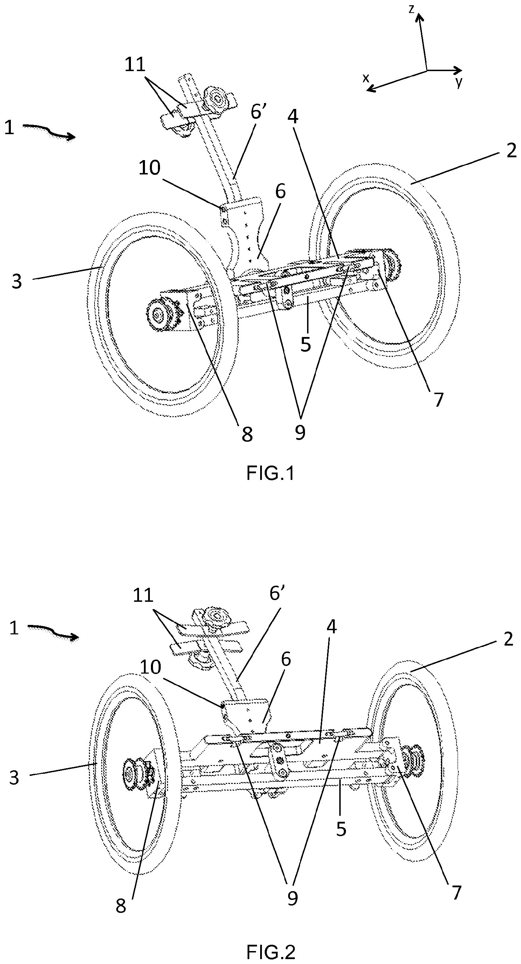

La figure 1 représente un premier mode de réalisation d'un train avant 1 d'un cycle à pédales selon l'invention. Dans la suite de la description, nous considèrerons que le train avant 1 se trouve dans une position de repos identique à celle qu'il aurait après fixation sur un bicycle, et ce dans un souci de simplification de sa description dans l'espace. Les termes supérieur, inférieur, avant, arrière, face, dos,... devront donc être interprétés dans ce contexte.

Le train avant 1 comporte deux roues 2,3 liées à un mécanisme de parallélogramme déformable. Les roues pourront avoir par exemple un diamètre compris entre 30 et 60 cm, de préférence 45 cm. Elles peuvent être équipées d'un système de freinage (non représenté) sur chacune d'elles, pouvant être choisi parmi des systèmes de freins à disques ou à patins. Le freinage est réparti de manière homogène sur les deux roues par un système de câbles et palonnier ou de freinage hydraulique.

Le train avant 1 inclut en outre le mécanisme de parallélogramme déformable ; celui-ci comprend deux corps rigides longitudinaux 4,5 qui se trouvent sensiblement horizontaux en position de fonctionnement, au repos, c'est-à-dire lorsque le train avant est monté sur un cycle à pédales. Le corps rigide 4 constitue le corps rigide supérieur et le corps rigide 5 constitue le corps rigide inférieur. Le mécanisme de parallélogramme déformable comprend en outre trois corps rigides transversaux : un corps rigide central 6 et deux corps rigides latéraux 7,8, qui se trouvent sensiblement verticaux en position de fonctionnement, au repos. Les 2 corps rigides longitudinaux sensiblement horizontaux 4,5 sont articulés en liaison tournante avec les 3 corps rigides transversaux sensiblement verticaux. La liaison tournante est par exemple assurée par des éléments pivots ou rotules de type paliers de guidage ou roulements à billes. Cette liaison permet au mécanisme de parallélogramme de se déformer en permettant un mouvement de translation entre les deux corps rigides longitudinaux 4,5, concomitant à une inclinaison des trois corps rigides transversaux 6,7,8. Les deux roues 2,3 sont liées respectivement aux deux corps rigides latéraux 7,8 par un axe (selon l'axe x sur les figures) leur autorisant un mouvement de rotation. Lors de l'inclinaison des corps rigides latéraux 7,8, les roues 2,3 suivent le mouvement d'inclinaison : elles présentent donc la caractéristique d'être inclinables. Selon une variante, chaque roue peut être munie d'un garde-boue (non représenté), fixé sur chaque corps rigide latéral 7,8.

Au moins un des corps rigides longitudinaux 4,5 comprend des moyens de fixation destinés à solidariser un module de transport d'une charge.

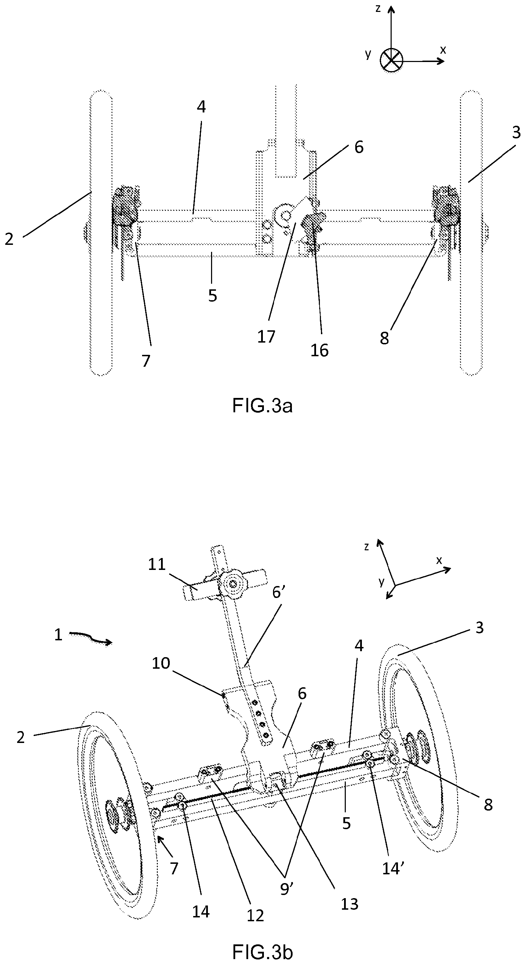

Selon le premier mode de réalisation, les moyens de fixation 9 et 9' se trouvent sur le corps rigide supérieur 4. Celui-ci pourra avantageusement avoir des dimensions en largeur (sa largeur étant selon l'axe y illustré sur la figure 1) supérieures à celles du corps rigide longitudinal inférieur 5, de sorte à augmenter la surface de contact avec le module de transport destiné à y être fixé. Pour améliorer la tenue du module, des moyens de fixation 9 pourront par exemple être localisés au niveau de la partie avant du corps rigide supérieur 4 (comme représenté sur les figures 1 et 2) et des moyens de fixation 9' pourront être localisés au niveau de la partie arrière du corps rigide supérieur 4 (comme par exemple représenté sur la figure 3b). Les moyens de fixation 9,9' pourront par exemple consister en des systèmes d'encoches et de clips, sans pour autant que cela soit limitatif.

Différentes configurations de fixation pourront être mise en oeuvre, dont un exemple est décrit ci-dessus. De manière générale, les moyens de fixation seront choisis parmi des dispositifs mécaniques assurant une fixation solide et fiable d'un module de transport de charge sur le corps rigide supérieur 4.

A titre d'exemple, les corps composant le mécanisme de parallélogramme déformable seront principalement composés d'acier ou d'aluminium. Le corps rigide longitudinal supérieur 4 pourra avoir une longueur (selon l'axe x illustré sur la figure 1) comprise entre 30 et 70 cm, une largeur (selon l'axe y) comprise entre 2 et 20 cm et une épaisseur (selon l'axe z) comprise entre 10 et 30 mm ; avantageusement, il aura respectivement comme dimensions 45 cm, 10 cm et 20 mm. Le corps rigide longitudinal inférieur 5 pourra avoir une longueur comprise entre 30 et 70 cm, une largeur comprise entre 2 et 20 cm et une épaisseur comprise entre 10 et 30 mm ; avantageusement, il aura respectivement comme dimensions 45 cm, 3 cm et 20 mm. Les corps rigides transversaux latéraux 7,8 pourront avoir des dimensions selon les axes y et z, comprises entre 5 et 10 cm, et une dimension selon l'axe x comprise entre 2 et 5 cm ; avantageusement, il aura respectivement comme dimensions 7 cm, 8 cm et 3 cm.

Le corps rigide central 6 est en liaison tournante avec les deux corps rigides longitudinaux 4,5, au niveau de leur partie centrale. Il s'étend en hauteur (selon l'axe z) au niveau de la partie arrière des corps rigides longitudinaux 4,5. A titre d'exemple, l'extension en hauteur du corps rigide central 6 pourra avoir des dimensions selon les axes x et z comprises respectivement entre 9 et 11 cm et entre 15 et 25 cm, et une dimension selon l'axe y comprise entre 1 et 4 cm ; avantageusement, il aura respectivement comme dimensions 10 cm, 25 cm et 2 cm.

Selon une variante, une béquille rétractable pourra être fixée sur le corps rigide central 6, de manière à assurer une meilleure stabilité du train avant 1 (solidaire ou pas d'un cycle à pédales) en stationnement.

Le train avant selon l'invention peut également comprendre un système d'amortisseur à frottement sec 12 dont une première partie est solidaire du corps rigide central 6 et une deuxième partie est solidaire d'un des corps rigides sensiblement horizontaux 4,5.

Selon une première variante illustrée sur la figure 3a, la première partie du système d'amortisseur 12 comprend une mâchoire 16 et la deuxième partie comprend une pièce plane 17, la mâchoire 16 étant apte à se resserrer sur la pièce plane 17. Avantageusement, la pièce plane 17 pourra avoir la forme d'un disque ou d'une portion de disque comme illustré sur la figure 3a. La pression de serrage de la mâchoire 16 sur la pièce plane 17 est variable et peut être commandée au moyen d'un élément d'interface (non représenté), destiné à être manipulé par l'utilisateur. L'élément d'interface pourra par exemple consister en une poignée préhensible par l'utilisateur au niveau du guidon. Ce système d'amortisseur, pilotable par l'utilisateur, peut remplacer une béquille rétractable telle que décrite précédemment : en effet, en position de stationnement, les roues étant bloquées par les freins, l'application d'une pression de serrage apte à bloquer le mouvement d'inclinaison entre le corps rigide central 6 et les corps rigides longitudinaux 4,5, assure la stabilité à l'arrêt du tricycle. Pendant un trajet, la possibilité d'appliquer une pression de serrage variable offre un système d'amortisseur adaptable à la conduite des utilisateurs et/ou aux caractéristiques de la charge transportée.

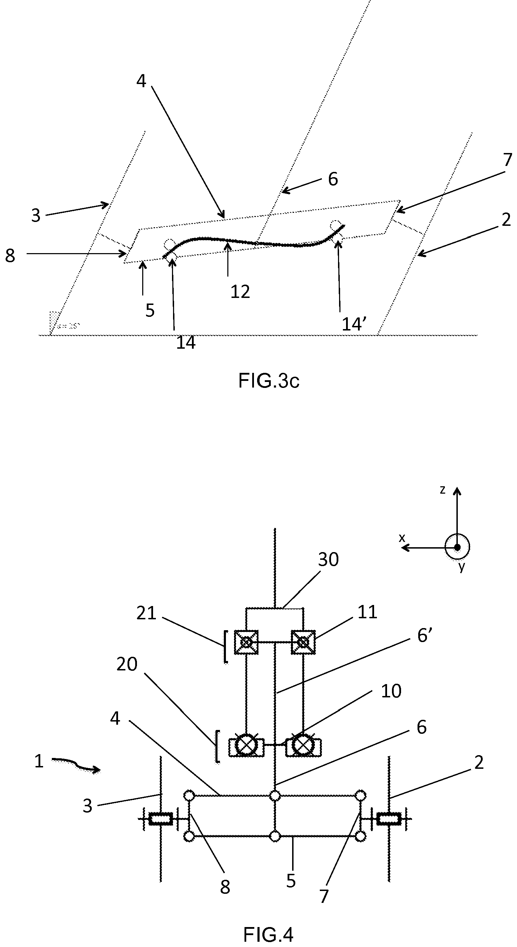

Selon une deuxième variante illustrée sur les figures 3b et 3c, le système d'amortisseur à frottement sec 12 pourra avantageusement consister en un système de ressort amortisseur à lames 12, composé de deux jeux de lames comportant chacun au moins deux lames flexibles, dont la capacité intrinsèque de flexion dépend du matériau dont elles sont composées et de leur épaisseur. A titre d'exemple, chaque lame pourra être constituée d'acier, et présenter une épaisseur comprise entre 0,5 et 3 mm. L'ajustement du nombre de lames composant le système de ressort amortisseur pourra permettre d'adapter la rigidité du système (effet ressort), l'effet d'amortisseur étant lié au frottement sec entre les lames.

Chaque jeu de lames constituant le système d'amortisseurs à lames 12 a une extrémité solidaire du corps rigide central 6 au niveau d'un élément de fixation 13 ; l'autre extrémité de chaque jeu de lames est soutenu par des guides de maintien 14,14' disposés en partie latérale (respectivement à droite pour un jeu de lames et à gauche pour l'autre jeu de lames), sur l'un des corps rigides longitudinaux sensiblement horizontaux 4,5. Selon le premier mode de réalisation, les guides de maintien 14,14' sont fixés sur le corps rigide inférieur 5 (comme illustré sur les figures 3b et 3c). Chaque guide 14, 14' consiste par exemple en deux cylindres métalliques disposés de sorte à guider les extrémités du jeu de lames, en laissant à celui-ci la possibilité de glisser légèrement longitudinalement. En cas d'inclinaison du corps rigide central 6, la lame du système d'amortisseurs 12 fléchit (comme illustré sur la figure 3c) et va d'une part amortir le mouvement d'inclinaison du corps rigide central 6 (effet amortisseur via le frottement entre les lames) ; d'autre part, la lame du système d'amortisseurs 12 va tendre à reprendre sa position de repos (non fléchie) et donc à faire revenir le corps rigide central 6 en position centrale d'équilibre (effet ressort).

Afin d'ajuster aisément les effets amortisseur et ressort du système d'amortisseurs 12, pour un jeu de lames donné (nombre de lames, épaisseur et matériau de celles-ci), la position longitudinale (selon l'axe x) des guides de maintien 14,14' sur le corps rigide inférieur 5 pourra être réglée. Plus la distance entre l'élément de fixation 13 et chaque guide de maintien 14,14' sera réduite, plus les effets amortisseur et ressort seront importants.

Selon une troisième variante, le train avant 1 selon l'invention peut comprendre les deux systèmes d'amortisseurs à frottement sec 12, pour assurer d'une part la fonction d'amortisseur pilotable par l'utilisateur et d'autre part la fonction de ressort qui aide au retour du corps rigide central 6 (solidaire de l'ensemble fourche de direction / guidon) en position centrale.

Le train avant 1 selon le premier mode de réalisation peut être fixé sur un cycle à pédales, par exemple sur un bicycle classique, et ainsi transformer ce dernier en tricycle. Il convient dans un premier temps de retirer la roue avant du bicycle que l'on souhaite transformer, et de déconnecter les câbles de freins avant.

La figure 4 représente un schéma cinématique simplifié du train avant 1 fixé sur la fourche de direction 30 dudit bicycle. C'est le corps rigide central 6 qui est solidarisé avec la fourche de direction 30, en deux zones de fixation 20 et 21. La première zone de fixation 20 est réalisée au niveau des deux pattes de la fourche de direction 30 et d'un logement 10 aménagé dans le corps rigide central 6 : un axe glissé dans les encoches et le logement 10 et bloqué par des éléments de vissage assure la solidarisation entre la fourche 30 et le corps rigide central 6. De manière avantageuse, le corps rigide central 6 pourra comporter plusieurs logements 10, à différentes hauteurs (selon l'axe z, comme illustré sur la figure 1), permettant au train avant 1 de se fixer sur de multiples tailles de fourche ou de bicycle. La seconde zone de fixation 21 se situe au-dessus de la première zone de fixation 20 (selon l'axe z).

Le corps rigide central 6 pourra avantageusement comporter un bras additionnel 6' permettant l'allongement du corps rigide central 6 vers le haut. Ce bras additionnel 6' sera préférentiellement réglable en hauteur. Alternativement, le corps rigide central 6 pourra être élaboré en un seul bloc incluant le bras 6'.

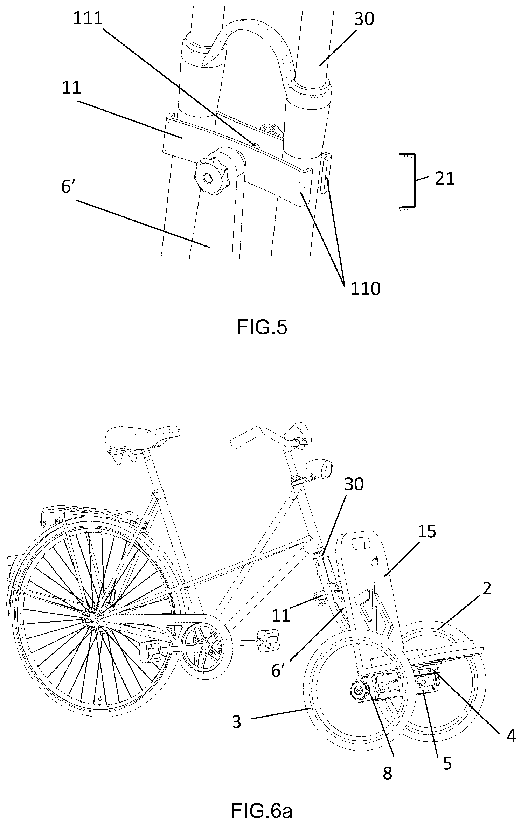

Comme illustré sur la figure 5, la seconde zone de fixation 21 est réalisée au niveau des deux fourreaux de la fourche de direction 30 et du bras additionnel 6' par un élément de fixation universelle 11. Cet élément 11 peut par exemple consister en un système de mâchoires 110, serrées sur les fourreaux de la fourche par une tige traversante 111. Selon une variante et en particulier pour les bicycles équipés de freins à mâchoires ayant deux points de fixation sur les fourreaux de fourche, l'élément 11 peut consister en une plaque avec des encoches traversantes permettant de visser l'élément 11 à la place desdits freins. L'élément de fixation 11 peut avantageusement être fixé sur le bras additionnel 6'. Le bras 6' étant réglable en hauteur, il sera possible de fixer l'élément 11 sur de multiples tailles de fourches ou de bicycle, tout en conservant une orientation sensiblement horizontale des corps rigides longitudinaux 4,5.

Grâce aux deux zones de fixation 20, 21, le train avant 1 selon le premier mode de réalisation de l'invention est solidaire de la fourche 30 du cycle en au moins 3 points d'appui, permettant d'assurer leur solidarisation dans un plan.

Il reste alors à raccorder les câbles de freins du train avant 1 aux commandes de freinage que l'on fixe au niveau du guidon du cycle. Le train avant 1 selon l'invention permet ainsi la transformation d'un bicycle en tricycle de manière simple et rapide.

La fourche de direction 30 étant solidaire du corps rigide central 6, les mouvements de rotation et d'inclinaison de celle-ci sont transmis aux deux roues avant par l'intermédiaire du mécanisme de parallélogramme déformable.

Le système d'amortisseur à frottement sec 12 permet d'amortir ces mouvements et, selon certaines variantes, d'aider au rétablissement de la fourche 30 en position centrale, assurant ainsi une conduite plus souple et confortable à l'utilisateur.

Selon un second mode de réalisation de l'invention, le corps rigide central 6 du train avant 1 a une forme adaptée pour constituer directement la fourche ou la colonne de direction d'un cycle. Le train avant 1 selon ce second mode de réalisation peut alors être incorporé à une structure de cycle (cadre, pédalier, roue arrière, guidon, ...) pour la fabrication d'un tricycle.

Le train avant 1 selon le second mode de réalisation comporte, comme dans le premier mode de réalisation, les deux roues 2,3, le mécanisme de parallélogramme déformable dont l'un des corps longitudinaux sensiblement horizontaux 4,5 comporte des moyens des fixation 9,9' destinés à solidariser un module 15,15',15" de transport de charges. Il peut également comprendre un système d'amortisseur à frottement sec 12. Le corps rigide central 6 constituant directement la fourche, les zones de fixation 20 et 21 ainsi que les éléments 10 et 11 ne sont pas présents.

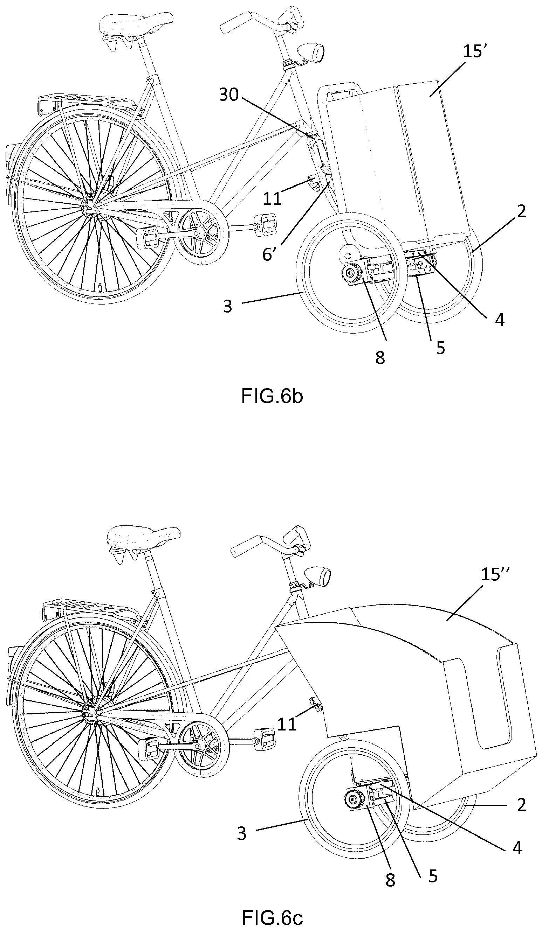

Selon une variante, applicable aux premier et second modes de réalisation, le train avant 1 comprend en outre un module 15,15',15'' de transport de charge, comme illustré sur les figures 6a, 6b et 6c. Le tricycle muni du train avant 1 selon l'invention peut ainsi se transformer en triporteur. Le module 15,15',15'' est solidarisé au train avant 1 grâce aux éléments de fixation 9,9' aménagés sur le corps rigide longitudinal (sensiblement horizontal) supérieur 4.

A titre d'exemple, le module peut consister en une plateforme 15, représentée sur la figure 6a. Elle permet de transporter différents types de charges, comme par exemple des caisses, des sacs ou autre objets pouvant être fixés sur ladite plateforme 15 par des tendeurs ou autre moyens.

Le module peut également consister en un chariot 15', représenté sur la figure 6b, particulièrement adapté au transport de courses, de vêtements ou autres objets divers. Le module peut également consister en un caisson 15" représenté sur la figure 6c, aménagé pour transporter un ou deux enfants.

Avantageusement, ces modules seront également configurés pour pouvoir être utilisés indépendamment du train avant 1 de triporteur ; à titre d'exemple, le chariot 15' et le caisson 15'' pourront être munis de roulettes et de moyens de préhension permettant à l'utilisateur de les tracter ou de les pousser lorsqu'ils sont séparés du train avant 1.

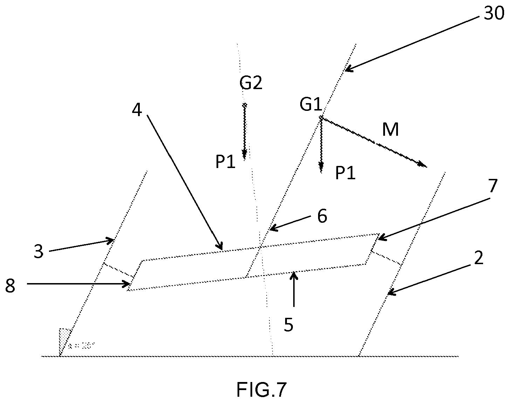

Le module 15,15',15'' étant uniquement fixé sur le corps rigide supérieur 4, il ne suit pas l'axe de la fourche 30 lors des mouvements d'inclinaison de celle-ci (correspondant à une rotation selon l'axe y). Comme illustré sur la figure 7, le centre de gravité du module (symbolisé par G2 sur la figure 7) suit le mouvement du corps rigide supérieur 4, lié au mécanisme de parallélogramme déformable : il subit une légère inclinaison par rapport à l'axe perpendiculaire au corps rigide supérieur 4, dans le sens opposé à l'inclinaison de la fourche de direction 30. Cette cinématique est particulièrement avantageuse pour assurer un bon confort de conduite à l'utilisateur du triporteur, en particulier dans le cas du transport de lourdes charges.

En effet, dans le cas d'une charge solidaire de la fourche de direction 30, le poids P1 de la charge (dont le centre de gravité est symbolisé par G1 sur la figure 7) génère un moment M proportionnel au sinus de l'inclinaison de la fourche 30. Cela se traduit par un effort important requis pour ramener la fourche 30 dans sa position centrale. En rendant la charge solidaire du corps rigide supérieur 4 (la charge étant symbolisée par G2 sur la figure 7), on diminue le basculement de la charge, ce qui permet de fournir moins d'effort pour ramener la fourche en position initiale.

Du fait de cette cinématique et grâce au système d'amortisseur à frottement sec 12, le train avant 1 selon l'invention procure une maniabilité et un confort de conduite très proche d'un bicycle, avec en plus la stabilité et la capacité de transport d'un triporteur.

Le train avant 1 d'un cycle à pédales selon l'invention peut trouver de multiples utilisations telles que :
- se rendre sur son lieu de travail, avec la possibilité de transporter des effets personnels ou professionnels,
- faire des déplacements professionnels par exemple de livraison, en milieu urbain ou péri-urbain,
- se déplacer à l'intérieur d'un site industriel étendu, avec la possibilité de transporter des objets ou dossiers de manière aisée,
- amener les enfants à l'école,
- aller faire les courses,

Bien entendu, l'invention n'est pas limitée aux modes de réalisation décrits et on peut y apporter des variantes de réalisation sans sortir du cadre de l'invention tel que défini par les revendications.

## Revendications

1. Train avant (1) d'un cycle à pédales comprenant deux roues avant (2,3) inclinables associées à un mécanisme de parallélogramme déformable, comportant au moins deux corps rigides (4,5) sensiblement horizontaux en liaison tournante avec un corps rigide central (6) sensiblement vertical et avec deux corps rigides latéraux (7,8), sensiblement verticaux et respectivement liés aux roues (2,3) ; le train avant (1) étant **caractérisé en ce qu'**au moins un des corps rigides (4,5) sensiblement horizontaux comporte des moyens de fixation (9,9') destinés à solidariser un module (15,15',15'') de transport d'une charge.

2. Train avant (1) d'un cycle à pédales selon la revendication précédente, comprenant un système d'amortisseur à frottement sec (12) dont une première partie est solidaire du corps rigide central (6) et une deuxième partie est solidaire d'un des corps rigides sensiblement horizontaux (4,5).

3. Train avant (1) d'un cycle à pédales selon la revendication précédente, dans lequel la première partie du système d'amortisseur (12) comprend une mâchoire (16) et la deuxième partie comprend une pièce plane (17), la mâchoire (16) étant apte à se resserrer sur la pièce plane (17).

4. Train avant (1) d'un cycle à pédales selon la revendication précédente, dans lequel la mâchoire (16) est configurée pour être commandée à l'aide d'un élément d'interface destiné à être piloté par l'utilisateur, pour permettre l'application d'une pression de serrage variable sur la pièce plane (17).

5. Train avant (1) d'un cycle à pédales selon la revendication 2, dans lequel le système d'amortisseur à frottement sec (12) est un système de ressort amortisseur, solidaire du corps rigide central (6) et soutenu à ses extrémités par des guides de maintien (14,14') disposés sur l'un des corps rigides sensiblement horizontaux (4,5).

6. Train avant (1) d'un cycle à pédales selon la revendication précédente, dans lequel la position longitudinale des guides de maintien (14,14') sur le corps rigide (4,5) sensiblement horizontal est réglable pour permettre d'ajuster les effets amortisseur et ressort.

7. Train avant (1) d'un cycle à pédales selon l'une des deux revendications précédentes, dans lequel le système d'amortisseur à frottement sec (12) est un système d'amortisseurs à lames.

8. Train avant (1) d'un cycle à pédales selon l'une des revendications précédentes, dans lequel le corps rigide central (6) est solidaire d'une fourche de direction (30) dudit cycle à pédales.

9. Train avant (1) d'un cycle à pédales selon la revendication précédente, dans lequel au moins deux zones de fixation (20,21) rendent solidaires le corps rigide central (6) et la fourche de direction (30).

10. Train avant (1) d'un cycle à pédales selon la revendication 1, dans lequel le corps rigide central (6) constitue une fourche de direction (30) dudit cycle à pédales.

11. Train avant (1) d'un cycle à pédales selon l'une des revendications précédentes, dans lequel les moyens de fixation (9,9') destinés à solidariser le module (15,15',15'') sont sur le corps rigide sensiblement horizontal supérieur (4) du mécanisme de parallélogramme déformable.

12. Train avant (1) d'un cycle à pédales selon l'une des revendications précédentes, comprenant en outre un module (15,15',15'') adapté au transport de la charge, uniquement solidaire d'un des corps rigides (4,5) sensiblement horizontaux.

## Patentansprüche

1. Vorderrahmen (1) eines pedalbetriebenen Fahrzeugs mit zwei neigbaren Vorderrädern (2, 3), die mit einem verformbaren Parallelogramm-Mechanismus verbunden sind, welcher zumindest zwei starre, im Wesentlichen horizontale Körper (4, 5) umfasst, die drehbar verbunden sind mit einem im Wesentlichen vertikalen zentralen starren Körper (6) und zwei jeweils mit den Rädern (2, 3) verbundenen, im Wesentlichen vertikalen seitlichen starren Körpern (7, 8), wobei der Vorderrahmen **dadurch gekennzeichnet ist, dass** zumindest einer der im Wesentlichen horizontalen starren Körper (4, 5) Befestigungsmittel (9, 9') umfasst, die dazu bestimmt sind, ein Transportmodul (15, 15', 15'') mit einer Last fest zu verbinden.

2. Vorderrahmen (1) eines pedalbetriebenen Fahrzeugs nach dem vorhergehenden Anspruch, welches ein Dämpfungssystem mit Trockenreibung (12) umfasst, bei dem ein erster Teil mit dem zentralen starren Körper (6) und ein zweiter Teil mit einem der im Wesentlichen horizontalen starren Körper (4, 5) fest verbunden ist.

3. Vorderrahmen (1) eines pedalbetriebenen Fahrzeugs nach dem vorhergehenden Anspruch, in dem der erste Teil des Dämpfungssystems (12) eine Klemmbacke (16) und der zweite Teil ein planes Stück (17) umfasst, wobei die Klemmbacke (16) imstande ist, sich auf das plane Stück (17) zu klemmen.

4. Vorderrahmen (1) eines pedalbetriebenen Fahrzeugs nach dem vorhergehenden Anspruch, in dem die Klemmbacke (16) so gestaltet ist, dass sie über ein vom Benutzer steuerbares Kopplungszwischenelement betätigt wird, um einen veränderlichen Klemmdruck auf das plane Stück (17) auszuüben.

5. Vorderrahmen (1) eines pedalbetriebenen Fahrzeugs nach Anspruch 2, in welchem das Dämpfungssystem mit Trockenreibung (12) ein Dämpfungsfedersystem ist, das mit dem zentralen starren Körper (6) fest verbunden ist und an seinen Enden durch Halteführungen (14, 14') gestützt wird, die auf einem der im Wesentlichen horizontalen starren Körper (4, 5) angeordnet sind.

6. Vorderrahmen (1) eines pedalbetriebenen Fahrzeugs gemäß dem vorhergehenden Anspruch, in dem die Längsposition der Halteführungen (14, 14') auf dem im Wesentlichen horizontalen starren Körper (4, 5) verstellbar ist, um die dämpfende Wirkung und die Feder anpassen zu können.

7. Vorderrahmen (1) eines pedalbetriebenen Fahrzeugs nach einem der beiden vorhergehenden Ansprüche, in dem das Dämpfungssystem mit Trockenreibung (12) ein Blattfeder-Dämpfungssystem ist.

8. Vorderrahmen (1) eines pedalbetriebenen Fahrzeugs nach einem der vorhergehenden Ansprüche, in dem der zentrale starre Körper (6) mit einer Lenkgabel (30) des besagten pedalbetriebenen Fahrzeugs fest verbunden ist.

9. Vorderrahmen (1) eines pedalbetriebenen Fahrzeugs nach dem vorhergehenden Anspruch, in dem zumindest zwei Befestigungsbereiche (20, 21) den zentralen starren Körper (6) und die Lenkgabel (30) fest miteinander verbinden.

10. Vorderrahmen (1) eines pedalbetriebenen Fahrzeugs nach Anspruch 1, in dem der zentrale starre Körper (6) eine Lenkgabel (30) des besagten pedalbetriebenen Fahrzeugs bildet.

11. Vorderrahmen (1) eines pedalbetriebenen Fahrzeugs nach einem der vorhergehenden Ansprüche, in dem sich die Befestigungsmittel (9, 9') zum Verbinden des Moduls (15, 15', 15'') auf dem im Wesentlichen horizontalen oberen starren Körper (4) des verformbaren Parallelogrammm-Mechanismus befinden.

12. Vorderrahmen (1) eines pedalbetriebenen Fahrzeugs nach einem der vorhergehenden Ansprüche, welcher des Weiteren ein Modul (15, 15', 15") umfasst, das sich für den Transport der Last eignet und lediglich mit einem der im Wesentlichen horizontalen starren Körper (4, 5) verbunden ist.

## Claims

1. A front end (1) of a pedal cycle comprising two tiltable front wheels (2, 3) associated with a deformable parallelogram mechanism, including at least two substantially horizontal rigid bodies (4, 5) rotatably linked with a substantially vertical central rigid body (6) and with two side rigid bodies (7, 8), which are substantially vertical and respectively linked with the wheels (2, 3); the front end (1) being **characterised in that** at least one of the substantially horizontal rigid bodies (4, 5) includes attachment means (9) intended for securing a module (15, 15', 15") for transporting a load.

2. A front end (1) of a pedal cycle according to the preceding claim, comprising a dry friction damper system (12), a first part of which is secured with the central rigid body (6) and a second part of which is secured with a substantially horizontal rigid body (4, 5).

3. A front end (1) of a pedal cycle according to the preceding claim, wherein the first part of the damper system (12) includes a jaw (16) and the second part comprises a flat part (17), with the jaw (16) being adapted to tighten on the flat part (17).

4. A front end (1) of a pedal cycle according to the preceding claim, wherein the jaw (16) is so configured as to be controlled by means of an interface element intended to be controlled by the user, to make it possible to apply a variable clamping pressure onto the flat part (17).

5. A front end (1) of a pedal cycle according to claim 2, wherein the dry friction damper system (12) is a spring damper system, secured with the central rigid body (6) and supported at its ends by holding guides (14, 14') positioned on one of the substantially horizontal rigid bodies (4, 5).

6. A front end (1) of a pedal cycle according to the preceding claim, wherein the longitudinal position of the holding guides (14, 14') on the substantially horizontal rigid body (4, 5) is movable to make it possible to adjust the damping and spring effects.

7. A front end (1) of a pedal cycle according to one of the preceding two claims, wherein the dry friction damper system (12) is a leaf damper system.

8. A front end (1) of a pedal cycle according to one of the preceding claims, wherein the central rigid body (6) is secured with a steering fork (30) of said pedal cycle.

9. A front end (1) of a pedal cycle according to the preceding claim, wherein at least two attachment areas (20, 21) make it possible to secure the central rigid body (6) with the steering fork (30).

10. A front end (1) of a pedal cycle according to claim 1, wherein the central rigid body (6) forms a steering fork (30) of said pedal cycle.

11. A front end (1) of a pedal cycle according to one of the preceding claims, wherein the attachment means (9, 9') intended for securing the module (15, 15', 15'') are on the top substantially horizontal rigid body (4) of the deformable parallelogram mechanism.

12. A front end (1) of a pedal cycle according to one of the preceding claims, further comprising a module (15, 15', 15'') adapted for transporting the load, only secured with one of the substantially horizontal rigid bodies (4, 5) .
